# EUROPÄISCHE PATENTSCHRIFT

(11) **EP 2 069 616 B1**
(45) Veröffentlichungstag und Bekanntmachung des Hinweises auf die Patenterteilung: **03.08.2011**
(21) Anmeldenummer: 07818618.6
(22) Anmeldetag: 02.10.2007
(51) Int. Cl.: F01N 3/022, F01N 3/035

(54) **VORRICHTUNG ZUR ENTFERNUNG VON RUSSPARTIKELN AUS DEM ABGASSTROM EINER BRENNKRAFTMASCHINE**
DEVICE FOR REMOVING SOOT PARTICLES FROM THE EXHAUST GAS FLOW OF AN INTERNAL COMBUSTION ENGINE
DISPOSITIF POUR ÉLIMINER DES PARTICULES DE SUIE DU FLUX DE GAZ D'ÉCHAPPEMENT D'UN MOTEUR À COMBUSTION INTERNE

(30) Priorität: 06.10.2006 DE 102006047766
(43) Veröffentlichungstag der Anmeldung: 17.06.2009
(73) Patentinhaber: DEUTZ Aktiengesellschaft, 51149 Köln (DE)
(72) Erfinder: MIEBACH, Rolf, 50321 Brühl (DE); SCHRAML, Stephan, 53859 Niederkassel (DE); KLAWATSCH, Dominikus, 7203 Wiesen (AT); KOVAC, Klaus, 8042 Graz (AT)
(86) Internationale Anmeldenummer: PCT/EP2007/008538
(87) Internationale Veröffentlichungsnummer: WO 2008/043453

(56) Entgegenhaltungen:
- WO-A-02/40837
- DE-A1- 3 929 939
- DE-A1-102004 052 186

## Beschreibung

Die Erfindung betrifft eine Vorrichtung zur Entfernung von Rußpartikeln aus dem Abgasstrom insbesondere einer Brennkraftmaschine, wobei die Vorrichtung ein zumindest in Teilbereichen dreidimensional von einer Eintrittsseite zu einer Austrittsseite durchströmter, aus einem porösen Filtermaterial bestehender Filter ist.

Eine derartige Vorrichtung ist aus der EP 1 515 012 A1 bekannt. Wesentlich bei dieser Vorrichtung ist die in Hauptströmungsrichtung des Abgases abwechselnde Anordnung unterschiedlicher Metallschäume. Dabei sind die Metallschäume abwechselnd mit einem Edelmetall oder einem Gemisch verschiedener Edelmetalle beschichtet oder unbeschichtet. Die Abgase durchströmen die ein offenes System bildenden Metallschäume von einer Eintrittsseite zu einer Austrittsseite auf einem beliebigen sich ändernden Weg und dabei werden Rußpartikel von dem offenporigen Metallschaum eingefangen. Dadurch erhöht sich der Druckverlust der bestehenden Strömungswege und das Abgas strömt über andere sich neu ergebende Strömungswege. Es handelt sich folglich um eine instationäre dreidimensionale Strömung durch einen Tiefenfilter.

Ein weiterer wesentlicher Gedanke eines offenen Systems ist die Vorstellung, dass eine solchermaßen ausgebildete Vorrichtung nicht mit Rußpartikeln überladen werden kann. Wenn eine maximale Beladung mit Rußpartikeln erreicht ist, soll das Abgas ohne weitere Abscheidung die Vorrichtung durchströmen, so dass ein "Verblocken" also ein Zusetzen des gesamten Filters vermieden wird. Wird dann ein Reinigungsvorgang durchgeführt, kann ein solches System wieder Rußpartikel einfangen.

Ein solcher Reinigungsvorgang wird beim Gegenstand der zuvor genannten Anmeldung eingeleitet, wenn Temperaturen von höher als 200 °C auftreten. Dann werden die in dem Metallschaum eingefangenen Rußpartikel durch Oxidation mit Stickstoffdioxid entfernt. Dabei entsteht das Stickstoffdioxid durch Oxidation des im Abgas vorhandenen Stickstoffmonoxids an einem Katalysator in Abhängigkeit von der Strömungsgeschwindigkeit des Abgases eben bei einer Temperatur oberhalb von etwa 200 °C. Da bei in Fahrzeugen wie Personenfahrzeugen oder Nutzfahrzeugen eingebauten Brennkraftmaschinen durch das sich zwangsläufig ergebende instationäre Betreiben dieser Fahrzeuge und demzufolge dieser Brennkraftmaschinen häufig Temperaturen höher als 200 °C erreicht werden, erfolgt die Reinigung des Systems in der Praxis schon vor Erreichung der maximalen Beladung. [Die DE 100 44 893 A1 offenbart ein Partikelfilter für ein CRT-System zur Abgasreinigung einer Dieselbrennkraftmaschine mit einem in dem Abgassystem angeordneten Partikelfilter, wobei der Partikelfilter einen in seinem Inneren in Längsrichtung angeordneten Bypass aufweist.

Der Erfindung liegt die Aufgabe zugrunde, eine gattungsgemäße Vorrichtung derart weiterzubilden, dass auch bei Betriebszuständen, bei denen über einen langen Zeitraum keine Reinigung der Vorrichtung erfolgt, ein Verblocken sicher vermieden wird.

Dieser Aufgabe liegt zunächst die Erkenntnis zugrunde, dass die Vorstellung, ein offenes System könne nicht verblocken, einer einschränkenden Berichtigung bedarf. Es hat sich nämlich durch Versuche herausgestellt, dass beim stationären Betrieb einer Brennkraftmaschine nur dann ein Verblocken eines offenen Systems vermieden wird, wenn die Porengröße des Filtermaterials sehr groß ist. Das heißt aber andererseits, dass dann der erreichbare Einfanggrad eines solchen Systems auf nicht akzeptabel geringe Werte absinkt. Ein System, das so ausgelegt ist, dass es einen Einfanggrad im Bereich von ca. 30 % aufweist, verblockt entgegen den bisherigen Vorstellungen, wenn die Brennkraftmaschine über einen langen Zeitraum in einem stationären Betriebspunkt oder einem quasi stationären Betriebsbereich betrieben wird, bei dem keine zur Einleitung des Reinigungsvorgangs erforderliche Temperatur erreicht wird. Ein solches Betriebsverhalten ist für in Fahrzeuge eingesetzte Brennkraftmaschinen untypisch, tritt aber durchaus bei Brennkraftmaschinen auf, die zum Betreiben von Arbeitsmaschinen oder Aggregaten eingesetzt werden.

Gelöst wird die Aufgabe dadurch, dass der Filter zumindest eine die Eintrittsseite mit der Austrittsseite verbindende, einen geringeren Strömungswiderstand als das Filtermaterial aufweisende Strömungsverbindung aufweist und dass die Strömungsverbindung zumindest in Teilabschnitten offen zu dem Filtermaterial ist. Es hat sich nämlich herausgestellt, dass die Strömungsverbindung zwischen der Eintrittsseite und der Austrittsseite verhindert, dass der Filter sich unter ungünstigen Betriebsbedingungen zusetzen kann. Entscheidend bei dieser Ausgestaltung ist, dass die Strömungsverbindung zumindest in Teilabschnitten offen zu dem Filtermaterial ist. Bei richtiger Dimensionierung führt die Strömungsverbindung nur zu einem geringfügigen Abfall des Einfanggrads, wenn das Filter normal beladen ist beziehungsweise wird.

Bei erhöhter Beladung kommt es zu einer Umorganisation der Strömung in Richtung der Strömungsverbindung. Wegen des Impulsaustauschs zwischen der Strömungsverbindung und den benachbarten, zur Verbindung offenen Filterbereichen kommt es zu einer Erhöhung der Strömungsgeschwindigkeit in diesen Filterbereichen, die einer weiteren Beladung mit Partikeln entgegenwirkt. Damit fungiert die Strömungsverbindung als selbstregulierender Bypass zum Filter, der eine Überladung des Filtermaterials sicher verhindern kann. Tatsächlich führt die erfindungsgemäße Anordnung sogar zu einer Erhöhung des realisierbaren Fanggrads bei normal beladenem Filter. Durch die beschriebene Anordnung ist es nämlich möglich, deutlich feiner strukturierte Filtermaterialien mit besseren Fangeigenschaften einzusetzen.

Zusammenfassend sind bei geeigneter Abstimmung zwischen dem Durchmesser der Strömungsverbindung und der Porenstruktur und Größe des Filtermaterials die folgenden Eigenschaften realisierbar:
- Bei normal mit Partikeln beladenem Filtermaterial ist der Durchströmungswiderstand der Strömungsverbindung hoch im Vergleich zu dem der Hauptstruktur. Dies ist darin begründet, dass die Strömungsverbindung zwar einen geringeren spezifischen Druckverlust als das Filtermaterial aufweist, aber bezüglich des Flächenanteils klein ist. Der Flächenanteil liegt im Bereich von ca. 1:20 bis 1:60, bevorzugt im Bereich von ca. 1:40. Die Strömungsverbindung wirkt als parallelgeschalteter, selbstregulierender "Bypass" und mindert den Wirkungsgrad des Gesamtsystems für den Einfang von Partikeln nur wenig (de facto kann er sogar steigen, da in Verbindung mit der Strömungsverbindung feineres Filtermaterial eingesetzt werden kann).
- Bei steigender Beladung erfolgt eine zunehmende Verlagerung der Strömung aus dem Filtermaterial in die Strömungsverbindung.
- Aufgrund der zur porösen Struktur des Filtermaterials offenen Oberfläche der Strömungsverbindung wird bei steigender Beladung der benachbarte Bereich des Filtermaterials ebenfalls immer stärker durchströmt. Dabei werden örtlich Strömungsgeschwindigkeiten erreicht, die den weiteren Partikeleinfang verhindern oder sogar zur Verlagerung der bereits eingelagerten

Partikel führen.
- Durch diese Mechanismen wird ein der Strömungsverbindung benachbarter gering partikelbeladener Bereich des Filtermaterials geschaffen, der eine Begrenzung des Druckverlusts auch bei einer klein bemessenen Strömungsverbindung bewirkt.
- Gleichzeitig wird durch die Verlagerung der Hauptströmung in die Strömungsverbindung und seine unmittelbare Umgebung, wo es nicht mehr zum Einfang weiterer Partikel kommt, der Wirkungsgrad des Gesamtsystems für den Einfang von Partikeln bei steigender Beladung progressiv verringert.
- In Summe wird damit erstmals die Kernforderung an ein "Offenes Filtersystem" erfüllt, dass nämlich der Wirkungsgrad des Partikeleinfangs bei langfristigem Versagen der Regenerationsmechanismen gegen Null gehen muss.

Mit dem beschriebenen System werden die folgenden weiteren vorteilhaften Eigenschaften realisiert:
- "Offene" Systeme ohne die beschriebenen Eigenschaften neigen zu extremen Ausblaseereignissen nach längerer Einlagerung von Partikeln und nachfolgendem instationären Betrieb des vorgeschalteten Dieselmotors. Solche Ereignisse werden mit dem vorgestellten System weitgehend vermieden, da immer Bereiche mit geringem Durchströmungswiderstand zur Verfügung stehen. Damit wird der für massive Ausblasung erforderliche Wirkdruck an dem beladenen Filtermaterial vermieden
- Der Verlauf von Regenerationsvorgängen wird positiv beeinflusst, da der Transport der Oxidationsmittel (NO2 und 02) sich zunächst hauptsächlich auf die nähere Umgebung der Strömungsverbindung beschränkt. Dadurch kommt es zu einem schnellen Druckabbau bei gleichzeitig langsamerem Fortschreiten der Reaktionen in das Filtermaterial und damit zu einem sanfteren Regenerationsverlauf.

In Weiterbildung der Erfindung ist die Strömungsverbindung ein in das Filtermaterial eingelassener Strömungskanal. Ein solcher Strömungskanal kann nachträglich oder schon bei der Herstellung des Filtermaterials in dieses eingelassen oder eingearbeitet werden. Beispielsweise kann der Strömungskanal nachträglich in das Filtermaterial durch einen Bohrvorgang eingearbeitet werden.

In weiterer Ausgestaltung weist die Strömungsverbindung bzw. der Strömungskanal einen konstanten Durchmesser auf. Diese Ausbildung hat den Vorteil, dass sie besonders leicht nachträglich in das Filtermaterial eingearbeitet werden kann. Die Ausbildung mit einem nicht konstanten Durchmesser hat dagegen den Vorteil, dass beispielsweise bei Abnahme des Durchmessers entlang der Strömungsverbindung von der Eintrittsseite her hin zu der Austrittsseite der Strömungsaustausch von dem entlang der Strömungsverbindung strömenden Abgas mit dem benachbarten Filtermaterial erhöht wird. Im Ergebnis muss hier je nach Filtermaterial und Ausgestaltung der Vorrichtung die geeigneteste Ausbildung gefunden werden. Auch hängt es von der Form und den Abmessungen der Vorrichtung beziehungsweise des Filtermaterials ab, ob ein oder mehrere Strömungverbindungen beziehungsweise Strömungskanäle in das Filtermaterial eingelassen werden.

Bevorzugt ist die Strömungsverbindung insgesamt ohne eine den Strömungsaustausch mit dem umgebenden Filtermaterial unterbindende Trennwand ausgebildet. Es kann aber beispielsweise bei einer stufenförmig sich verengenden Strömungsverbindung sinnvoll sein, im Bereich der stufenförmigen Absätze gezielte "Einleittrichter" vorzusehen.

In Weiterbildung der Erfindung ist das Filtermaterial Metallschaum oder Keramikschaum. Der Metallschaum zeichnet sich durch hohe thermische Oxidationsbeständigkeit, hohe Temperaturwechselbeständigkeit, hohe Korrosionsbeständigkeit, insbesondere gegenüber verdünnter Schwefelsäure, und mechanische Festigkeit aus.

In weiterer Ausgestaltung der Erfindung ist vorgesehen, dass der Filter in Strömungsrichtung von der Eintrittsseite zu der Austrittsseite aus Filtermaterialen unterschiedlicher Porengröße aufgebaut ist. Dabei nimmt die Porengröße überwiegend in Strömungsrichtung ab. Diese Ausgestaltung, die, wie die vorherigen Angaben zu der Materialauswahl, auch für das Füllmaterial gilt, bewirkt eine weitere Steigerung des Abscheidegrades.

In Weiterbildung der Erfindung ist das Filtermaterial zumindest in Teilbereichen katalytisch beschichtet. Hierzu bieten sich Edelmetalle aus der Gruppe Ru, Rh, Pd, Os, Ir, Pt oder einem Gemisch dieser Edelmetalle an. Zudem kann das Filtermaterial mit einer die Verbrennungstemperatur der Rußpartikel herabsetzenden Verbindung beschichtet sein, wobei vorzugsweise Cer-orthovanadat (CeVO₄) verwendet wird.

Weitere vorteilhafte Ausgestaltungen sind der Zeichnungsbeschreibung zu entnehmen, in der ein in den Figuren dargestelltes Ausführungsbeispiel näher beschrieben ist. Es zeigen:
Fig. 1 einen Filter mit einer Strömungsverbindung in normal beladenem Zustand,
Fig. 2 einen Filter mit einer Strömungsverbindung in hoch beladenem Zustand und
Fig. 3 einen Filter mit einem herkömmlichen Bypass, der in das Filter integriert ist.

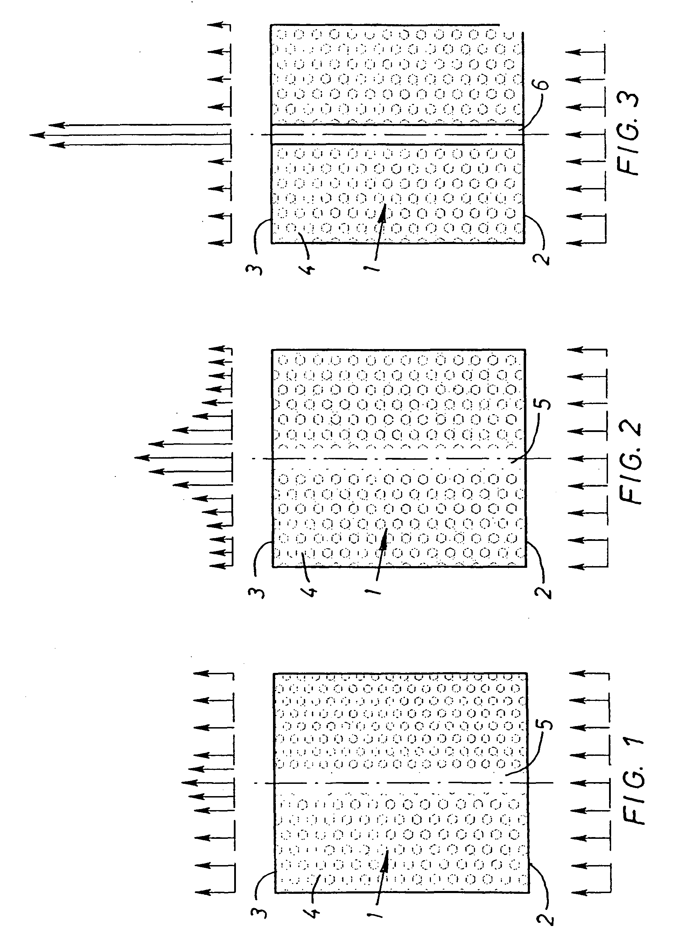

Der in Fig. 1 dargestellte Filter ist schematisch und ohne Zubehörteile wie Gehäuse oder Ähnliches dargestellt. Das Filtermaterial 1 des Filters ist in dem Ausführungsbeispiel mit einer von der Eintrittsseite 2 zu der Austrittsseite 3 gleichen Porengröße 4 ausgebildet. Der Filter kann aber auch aus Filterscheiben bestehen, die in Strömungsrichtung von der Eintrittsseite 2 zu der Austrittsseite 3 unterschiedliche Porengröße 4, und zwar bevorzugt eine abnehmende Porengröße 4 aufweisen. Eine Strömungsverbindung 5 ist zentral mittig in das Filtermaterial 1 eingelassen und verbindet die Eintrittsseite 2 mit der Austrittsseite 3. Ausgehend von einer auf der Eintrittsseite 2 gleichmäßigen Verteilung (dargestellt durch die Pfeile) ist die Strömungsgeschwindigkeit des Abgases von unbeladenem Filtermaterial auf der Austrittsseite 3 im Bereich der Strömungsverbindung 5 geringfügig höher als im Bereich des benachbarten Filtermaterials 1.

Im Unterschied dazu ist in Fig. 2 die Strömungsgeschwindigkeit bei sehr hoch beladenem Filtermaterial 1 dargestellt. Die Strömungsgeschwindigkeit auf der Eintrittsseite entspricht der von Fig. 1, während auf der Austrittsseite 3 die Strömungsgeschwindigkeit im Bereich der Strömungsverbindung 5 deutlich höher als im Vergleich zu Fig. 1 ist. Die Strömungsgeschwindigkeit nimmt in den benachbart zu der Strömungsverbindung 5 liegenden Bereichen des Filtermaterials 1 kontinuierlich bis zu einem geringen Wert in den Randbereichen ab.

Im Gegensatz hierzu ist in Fig. 3 die Strömungsverteilung bei einer Bypassleitung 6 dargestellt. Hierbei ist es gleichgültig, ob diese herkömmliche Bypassleitung 6 durch das Filtermaterial 1 hindurchführt oder außerhalb des Filtermaterials 1 den Filter insgesamt passiert. Hier stellt sich in dem Filtermaterial 1 eine geringe Strömungsgeschwindigkeit ein und in der Bypassleitung herrscht eine sehr hohe Strömungsgeschwindigkeit. Der Abscheidegrad eines solchermaßen ausgebildeten Filters ist unakzeptabel gering.

### Bezugszeichen

- 1: Filtermaterial
- 2: Eintrittsseite
- 3: Austrittsseite
- 4: Porengröße
- 5: Strömungsverbindung
- 6: Bypassleitung

## Patentansprüche

1. Offenes Filtersystem zur Entfernung von Rußpartikeln aus dem Abgasstrom insbesondere einer Brennkraftmaschine, wobei die Vorrichtung ein zumindest in Teilbereichen dreidimensional von einer Eintrittsseite zu einer Austrittsseite durchströmter, aus einem porösen Filtermaterial bestehender Filter ist,
**dadurch gekennzeichnet, dass** der Filter zumindest eine die Eintrittsseite (2) mit der Austrittsseite (3) verbindende, einen geringeren Strö mungswiderstand als das Filtermaterial (1) aufweisende Strömungsverbindung (5) aufweist und dass die Strömungsverbindung (5) vollkommen offen ist und dass die Strömungsverbindung (5) zumindest in Teilabschnitten offen zu dem Filtermaterial (1) ist.

2. Filtersystem nach Anspruch 1, ***dadurch gekennzeichnet,* dass** die Strömungsverbindung (5) einen konstanten Durchmesser aufweist. Filtersystem 3,

3. Filtersystem nach einem der vorherigen Ansprüche, ***dadurch gekennzeichnet,* dass** das Filtermaterial (1) Metallschaum oder Keramikschaum ist.

4. Filtersystem nach einem der vorherigen Ansprüche, ***dadurch gekennzeichnet,* dass** der Filter in Strömungsrichtung von der Eintrittsseite (2) zu der Austrittsseite (3) aus Filtermaterialien (1) unterschiedlicher Porengröße aufgebaut ist.

5. Filtersystem nach Anspruch 9, ***dadurch gekennzeichnet,* dass** die Porengröße in Strömungsrichtung abnimmt.

6. Filtersystem nach einem der vorherigen Ansprüche, ***dadurch gekennzeichnet,* dass** das Filtermaterial (1) zumindest in Teilbereichen katalytisch beschichtet ist.

## Claims

1. Open filter system for removing soot particles from the exhaust gas flow, particularly of an internal combustion engine, wherein the device is a filter composed of porous filter material, through at least some areas of which gas flows three-dimensionally from an inlet side to an outlet side, ***characterized in that*** the filter has at least one flow connection (5) connecting the inlet side (2) to the outlet side (3) and having a lower flow resistance than the filter material (1), and that the flow connection (5) is fully open, and that the flow connection (5) is at least in some sections open to the filter material (1).

2. Filter system according to Claim 1, ***characterized in that*** the flow connection (5) has a constant diameter.

3. Filter system according to one of the preceding claims, ***characterized in that*** the filter material (1) is a metal foam or ceramic foam.

4. Filter system according to one of the preceding claims, ***characterized in that*** the filter is constructed from filter materials (1) of differing pore size in the flow direction from the inlet side (2) to the outlet side (3).

5. Filter system according to Claim 4, ***characterized in that*** the pore size diminishes in the direction of flow.

6. Filter system according to one of the preceding claims, ***characterized in that*** the filter material (1) at least in some areas, has a catalytic coating.

## Revendications

1. Système de filtre ouvert pour éliminer les particules de suie d'un flux de gaz d'échappement, en particulier d'un moteur à combustion interne, le dispositif étant un filtre se composant d'un matériau filtrant poreux, traversé par l'écoulement au moins dans des zones partielles de manière tridimensionnelle depuis un côté d'entrée jusqu'à un côté de sortie,
**caractérisé en ce que** le filtre présente au moins une liaison d'écoulement (5) reliant le côté d'entrée (2) au côté de sortie (3), présentant une plus faible résistance à l'écoulement que le matériau filtrant (1), et **en ce que** la liaison d'écoulement (5) est complètement ouverte et **en ce que** la liaison d'écoulement (5) est ouverte vers le matériau filtrant (1), au moins dans des portions partielles.

2. Système de filtre selon la revendication 1, **caractérisé en ce que** la liaison d'écoulement (5) présente un diamètre constant.

3. Système de filtre selon l'une quelconque des revendications précédentes, **caractérisé en ce que** le matériau filtrant (1) est une mousse métallique ou une mousse céramique.

4. Système de filtre selon l'une quelconque des revendications précédentes, **caractérisé en ce que** le filtre se compose, dans la direction d'écoulement depuis le côté d'entrée (2) jusqu'au côté de sortie (3), de matériaux filtrants (1) de tailles de pores différentes.

5. Système de filtre selon la revendication 4, **caractérisé en ce que** la taille des pores diminue dans la direction d'écoulement.

6. Système de filtre selon l'une quelconque des revendications précédentes,
**caractérisé en ce que** le matériau filtrant (1) est pourvu d'un revêtement catalytique au moins dans des régions partielles.
